# EUROPEAN PATENT APPLICATION

(11) **EP 2 669 432 A1**
(43) Date of publication of application: **04.12.2013**
(21) Application number: 12169920.1
(22) Date of filing: 30.05.2012
(51) Int. Cl.: D21H 27/30, D21H 27/38, B32B 29/00

(54) **Method for making multiply-board and multiply-board product**

(71) Applicant: Metso Paper Inc., 00130 Helsinki (FI)
(72) Inventor: Linnonmaa, Pekka, 00370 Helsinki (FI); Vaittinen, Henri, 04400 Järvenpää (FI)
(74) Representative: Berggren Oy Ab

(57) **Abstract**

The invention relates to a method for making a multiply-board, in which method a multiply-board (10), especially for making folding box board, is produced and which comprises a top ply (11), a back ply (13) and at least one middle ply (12) in between the top ply (11) and the back ply (13). In the method at least one (12, 13) of the plies of the multiply-board except the top ply (11) is mainly made of mechanical pulp that is bleached 0 - 10 % units higher compared to the unbleached pulp and in the method brightness properties required of the multiply-board product are achieved by using coating technologies and/or by using pigments that will provide needed end brightness. The invention also relates to a multiply-board, especially folding box board, which multiply-board (10) has at least three plies (11, 12, 13), which comprise a top ply (11), back ply (13) and at least one middle ply (12) in between the top ply (11) and the back ply (13). At least one (12,13) of the plies of the multiply-board except the top ply (11) is mainly of mechanical pulp that is bleached 0 - 10 % units higher compared to the unbleached pulp and the brightness properties required of the multiply-board product are provided by coating technologies and/or by using pigments that will provide needed end brightness.

## Description

The invention relates to making of multiply-board and a multiply-board product. More especially the invention relates to method for making multiply-board according to the preamble of claim 1 and to multiply-board product according to the preamble of claim 7.

Paper and board are available in a wide variety of types and can be divided according to basis weight in two grades: papers usually with a single ply and a basis weight of 25-300 g/m² and boards manufactured in mostly by multi-ply technology and having a basis weight of 150-600 g/m². It should be noted that the borderline between paper and board is flexible since board grades with lightest basis weights are lighter than the heaviest paper grades. Generally speaking, paper is used for printing and board for packaging.

The subsequent descriptions are examples of values presently applied for fibrous webs, and there may be considerable fluctuations from the disclosed values. The descriptions are mainly based on the source publication Papermaking Science and Technology, section Papermaking Part 3, edited by Jokio, M., published by Fapet Oy, Jyväskylä 1999, 361 pages.

Board making makes use of chemical pulp, mechanical pulp and/or recycled pulp. Boards can be divided e.g. in the following main groups cartonboards, containerboards and specialty boards. Cartonboards are mainly used for consumer product packaging and they comprise FBB = folding boxboard, WLC = white-lined chipboard, SBS = solid bleached sulfate board, SUS = solid unbleached sulfate board and LPB = liquid packaging board. Containerboards comprise f. ex. linerboard and other corrugated boards and specialty boards comprise wallpaper base, plaster board etc. Each end use sets its own demands on the mechanical and functional properties of cartonboards. Basically a certain mechanical strength and stiffness, especially bending stiffness is required and in the optimum structure middle-ply is very bulky and top and back plies have high modulus of elasticity. Often also purity and cleanliness requirements are very high and also almost all cartonboards have defined printing properties and for example the printing requirements of folding box board are usually very high and also high bulkiness is required of folding box board.

Folding box board is used for various packaging purposes and basis weight is 160 - 450 g/m² and it is usually made of three plies. Top and back plies are made of bleached chemical pulp and middle ply of mechanical pulp and machine broke. Folding box board can be surface sized, uncoated, single or double coated on top side, double coated on top side and single coated on the back side depending on the end use. Typical folding box board production line comprise a three ply forming section, press section with at least one shoe press or large diameter roll for maximum bulk, pre-dyer, MG (machine glazing) dryer, after-dyer section, sizer, calender and coating stations.

One important goal of producing multiply-boards is to improve the quality of multiply-board products and the economy of producing the same.

In US patent application publication 20060102303 a board product and method for making the same is disclosed in which the product is a coated boxboard product which has two or more fiber plies and outside plies consisting of bleached chemical pulp and middle plies of at least one of groundwood, pressure groundwood, chemi-thermo-mechanical pulp, recycled pulp and broke.

It is know from prior art that in the bleaching of mechanical pulps is used for removing color-contributing components selectively and in bleaching usually hydrogen peroxide is used. Bleaching results simultaneously in brightening and strengthening the pulp but leads also to decreased bulk which in folding box board means that more raw material is needed since basis weight needs to be raised. In an example presented in figure 7 of G.X. Pan: "An insight into the behavior of aspen CTMP in peroxide cleaning" 2.11.2001, Pulp & Paper Canada 102(11):T323-327 (November 2001) the bulk falls due to bleaching over 40 %.

It is also known from prior art that in connection with liners by curtain coating the base paper will be very well covered by uniform coating paste layer. Even brown liner board can be coated white and no bleached fibers are needed for brightness. In WO publication 2011154376 a method for producing a single-layer or multiple-layer coated paper is disclosed in which instead of producing a bleached top ply or a top ply with de-inked fibers, a pigment-containing application layer is coated onto the surface of the base paper produced in one layer or multiple layers with an overall quantity or an overall coating with of from 10 to 30 g/m² by way of a curtain applicator which is known per se and applies one layer of multiple layers. This prior art method is to solve the problems relating to produce paper or board with white mottling-free surface with reasonable amount of coating, especially when producing White-Top-Liner (WTL) or White-Top-Test-Liner (WTTL).

In this description and the claims by brightness is meant ISO-brightness that is intrinsic reflectance factor of board defined at wave length 457nm measured by Elrepho-reflectometer with filter no 8, R457.

An object of the invention is to attain a method for making multiply-board and a multiply-board product, especially a folding box board in which the problems relating to bleaching treatments' negative effects in bulkiness have been eliminated or at least minimized.

In order to solve the problems mentioned above and to solve those described later the method for making multiply-board, especially for making folding box board, is mainly characterized by the features of the characterizing clause of claim 1. The multiply-board, especially folding box board, according to the invention is mainly characterized by the features of the characterizing clause of claim 7.

Multiply-boards have typically 3-4 plies which comprise a top ply, that will from the front surface of the finished commercial product, for example the surface on which possible printing is done, a back ply, that will be back side of the finished commercial product, and at least one middle ply that will be located in between the top and the back ply. Typically the thickness of a middle ply is 70 -270 g/m² and the thickness of a top or a back plies is 20 - 60 g/m².

In accordance with the invention in the method for making multiply-board at least one of the plies of the multiply-board except the top ply is mainly made of mechanical pulp that is bleached 0 - 10 % units higher compared to the unbleached pulp and in the method brightness properties required of the multiply-board are achieved by using coating technologies and/or by using pigments that will provide needed end brightness on the top coating layer of at least the top ply.

In accordance with an advantageous feature of the invention bulk of the middle ply is at least 2,5 which will make the bulk of the end product i.e the multiply-board higher than 2.0.

According to an advantageous feature of the invention brightness value of at least 78 % is achieved by using pigments like TiO₂, calcined clay or PCC or by curtain / air knife coating by using at least one coating station, advantageously a curtain or spray or air knife coating station.

According to an advantageous feature in the method the multiply-board is calendered by a metal belt calender for maximizing the bulkiness. Preferably the metal belt calender is located before coating.

According to an advantageous example the multiply-board has 2 - 3 coating layers of coating with 8-14 g/m² /coating, the top ply 11 is of 100 % pulp and the middle ply 12 is 65 -75 % of mechanical pulp and the rest is of reject pulp and the back ply 13 is of 100% pulp. The end brightness of the multiply-board is 78 - 84 %.

In accordance with advantageous features of the invention in the multiply-board with grammage 170 - 300 g/m² the bulk is higher than 1, 9 and with grammage over 300 g/m² the bulk is higher than 2, 0.

In the table 1 brightness values of some typical unbleached groundwood (mechanical) pulp grades are shown

| **Name** | **Wood species** | **Brightness %** |
|---|---|---|
| Norway spruce | Picea abies | 65 |
| Scots pine | Pinus silvestris | 65 |
| Aspen | Populus tremula | 70 |
| Western hemlock | Tsuga heterophylla | 48 |
| Spruce | Picea sitchensis | 56 |
| Balsam | Abies amabalis | 50 |
| Cottonwood | Populus triocharpa | 60 |
| Spruce | Picea galuca | 61 |
| Balsam | Abies balsamea | 60 |
| Pine | Pinus banksiana | 55 |
| Poplar | Populus grandidentata | 48 |
| Radiata pine | Pinus radiate | 63 |

According to the invention in one of the plies other than in the top ply pulp is used that is bleached 0 -10 % units higher compared to the unbleached pulp grade used for producing the ply in question.

In the following the invention is described in more detail referring to the accompanying drawings in which

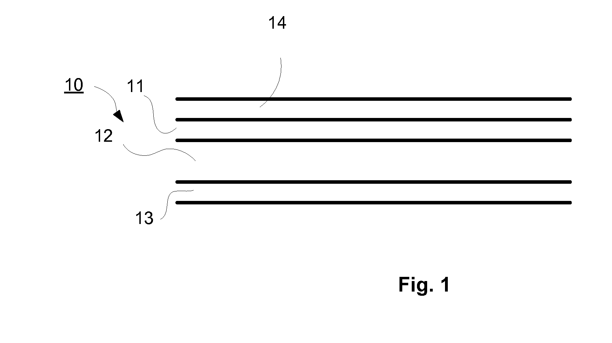

Figure 1 is a schematical example of cross-section of a multiply-board.

In the example of figure 1 the multiply-board 10 has three plies 11, 12, 13; a top ply 11, a back ply 13 and a middle ply 12 in between the top ply 11 and the back ply 13. At least one 12, 13 of the plies of the multiply-board except the top ply 11 is mainly of mechanical pulp that is bleached 0 - 10 % units higher compared to the unbleached pulp and the brightness properties required of the multiply-board product are provided by using coating technologies and/or by using pigments that that will provide needed end brightness on the coating layer 14 on the top ply 11. The coating layer 14 can be provided by one or more layers of coating applied on one or more coating stations.

In an advantageous example of the multiply-board there is 2 - 3 coating layers 14 of coating with 8-14 g/m² /coating layer. The top ply 11 is of 100 % pulp and the middle ply 12 is 65 -75 % of mechanical pulp and the rest is of reject pulp. The back ply 13 is of 100% pulp. The end brightness of the multiply-board is 78 - 84 %.

In accordance with advantageous features of the invention in the multiply-board with thickness 170 - 300 g/m² the bulk is higher than 1,9 and with thickness over 300 g/m² the bulk is higher than 2,0.

## Claims

1. Method for making a multiply-board, in which method a multiply-board (10), especially for making folding box board, is produced and which comprises a top ply (11), a back ply (13) and at least one middle ply (12) in between the top ply (11) and the back ply (13), **characterized in that** in the method at least one (12,13) of the plies of the multiply-board except the top ply (11) is mainly made of mechanical pulp that is bleached 0 - 10 % units higher compared to the unbleached pulp and in the method brightness properties required of the multiply-board product are achieved by using coating technologies and/or by using pigments that will provide needed end brightness.

2. Method according to claim 1, **characterized in that** in the method the coating technology used is curtain or spray or air knife coating.

3. Method according to claim 1, **characterized in that** bulk of the multiply-board (10) is higher than 2.0.

4. Method according to claim 1, **characterized in that** brightness value of at least 78 % is achieved by using pigments like Ti02, calcined clay or PCC.

5. Method according to claim 1, **characterized in that** brightness value of at least 78 % is achieved in at least one of coating layers by the curtain, spray or air knife coating.

6. Method according to claim 1, **characterized in that** in the method the multiply-board (10) is calendered by a metal belt calender for maximizing the bulkiness.

7. Multiply-board, especially folding box board, which multiply-board (10) has at least three plies (11, 12, 13), which comprise a top ply (11), back ply (13) and at least one middle ply (12) in between the top ply (11) and the back ply (13), **characterized in that** at least one (12,13) of the plies of the multiply-board except the top ply (11) is mainly of mechanical pulp that is bleached 0 - 10 % units higher compared to the unbleached pulp and the brightness properties required of the multiply-board product are provided by coating technologies and/or by using pigments that will provide needed end brightness.

8. Board according to claim 7, **characterized in that** the coating technology used is curtain or spray or air knife coating.

9. Board according to claim 7, **characterized in that** brightness value of the board is at least 78 % and it is achieved by using pigments like Ti02, calcined clay or PCC.

10. Board according to claim 7, **characterized in that** brightness value of the board is at least 78 % and it is achieved in at least one of coating layers by the curtain, spray or air knife coating.

11. Board according to claim 7, **characterized in that** bulk of the multiply-board (10) is at least 2.0.

12. Board according to claim 7, **characterized in that** in the top and back plies (11, 13) of the multiply-board (10) have the following properties:
- 2 - 3 coating layers 14 of coating with 8-14 g/m² /coating
- the top ply 11 is of 100 % pulp,
- the middle ply 12 is 65 -75 % of mechanical pulp,
- the back ply 13 is of 100% pulp and
- the end brightness of the multiply-board is 78 - 84 %.

## Amended claims

### Amended claims in accordance with Rule 137(2) EPC.

**1.** Method for making a multiply-board, in which method a multiply-board (10), especially for making folding box board, is produced and which comprises a top ply (11), a back ply (13) and at least one middle ply (12) in between the top ply (11) and the back ply (13), **characterized in that** in the method at least one (12,13) of the plies of the multiply-board except the top ply (11) is mainly made of mechanical pulp that is bleached 0 - 10 % units higher compared to the unbleached pulp and in the method brightness properties required of the multiply-board product are achieved by using coating technologies and/or by using pigments that will provide needed end brightness.

**2.** Method according to claim 1, **characterized in that** in the method the coating technology used is curtain or spray or air knife coating.

**3.** Method according to claim 1, **characterized in that** bulk of the multiply-board (10) is higher than 2.0.

**4.** Method according to claim 1, **characterized in that** brightness value of at least 78 % is achieved by using pigments like Ti02, calcined clay or PCC.

**5.** Method according to claim 1, **characterized in that** brightness value of at least 78 % is achieved in at least one of coating layers by the curtain, spray or air knife coating.

**6.** Method according to claim 1, **characterized in that** in the method the multiply-board (10) is calendered by a metal belt calender for maximizing the bulkiness.

**7.** Multiply-board, especially folding box board, made according to the method of any of claims 1 - 6, which multiply-board (10) has at least three plies (11, 12, 13), which comprise a top ply (11), back ply (13) and at least one middle ply (12) in between the top ply (11) and the back ply (13), in which at least one (12,13) of the plies of the multiply-board except the top ply (11) is mainly of mechanical pulp that is bleached 0 - 10 % units higher compared to the unbleached pulp and the brightness properties required of the multiply-board product are provided by coating technologies and/or by using pigments that will provide needed end brightness.

**8.** Board according to claim 7, **characterized in that** the coating technology used is curtain or spray or air knife coating.

**9.** Board according to claim 7, **characterized in that** brightness value of the board is at least 78 % and it is achieved by using pigments like Ti02, calcined clay or PCC.

**10.** Board according to claim 7, **characterized in that** brightness value of the board is at least 78 % and it is achieved in at least one of coating layers by the curtain, spray or air knife coating.

**11.** Board according to claim 7, **characterized in that** bulk of the multiply-board (10) is at least 2.0.

**12.** Board according to claim 7, **characterized in that** in the top and back plies (11, 13) of the multiply-board (10) have the following properties:
- 2 - 3 coating layers 14 of coating with 8 -14 g/m²/coating
- the top ply 11 is of 100 % pulp,
- the middle ply 12 is 65 -75 % of mechanical pulp,
- the back ply 13 is of 100% pulp and
- the end brightness of the multiply-board is 78 - 84 %.
